# EUROPEAN PATENT SPECIFICATION

(11) **EP 1 953 723 B1**
(45) Date of publication and mention of the grant of the patent: **21.03.2012**
(21) Application number: 08380008.6
(22) Date of filing: 18.01.2008
(51) Int. Cl.: G08B 25/08, H04L 12/58, H04M 3/487, H04M 3/50, H04M 11/04, G06Q 10/00

(54) **System and method for providing automatic responses to a large number of incoming messages**
System und Verfahren zum automatischen Antworten auf eine grosse Anzahl eingehender Nachrichte
Système et procédé pour la fourniture de réponses automatiques à de nombreux messages arrivés

(30) Priority: 19.01.2007 ES 200700159
(43) Date of publication of application: 06.08.2008
(73) Proprietor: Vodafone Group PLC, Newbury Berkshire RG14 2FN (GB); Vodafone España, S.A., 28108 Alcobendas (ES)
(72) Inventor: Garate Mutiloa, Lucia, 28043 - Madrid (ES); Esteve Asensio, Guillermo, 28007 Madrid (ES)
(74) Representative: Keston, David Arthur

(56) References cited:
- US-B1- 6 816 885

## Description

### Object of the Invention

The object of the present invention is to present a system able to automatically receive, format and coherently and suitably respond to the largest possible number of messages, received by different means, such as SMS, electronic and voice mail, in the shortest time possible.

### Field of the Invention

The application field of the present invention is that of telecommunications, and more specifically the field of automated response systems for massive accesses to one and the same service.

### Background of the Invention

In extraordinary circumstances, such as an emergency situation, a widespread complaint situation or the like, a substantial percentage of people may attempt to simultaneously contact the same response center (customer service, emergency service, etc.). Due to the current volumes involved this can mean millions of simultaneous contacts, exceeding the response capacity despite the fact that it is technically possible to receive all the messages such as SMS or electronic mail for example.

The usual solution consists of any of the following:
- Anticipating these situations and having personnel on duty, or developing response trees, either in interactive voice recognition (IVR) systems or in electronic mail systems, giving standardized responses such as "thanks for your message" restraining the avalanche.
- Another option is to block the so-called avalanche and not attend it at all, as is proposed in the EMTEL ETSI standard number ETSI SR 002 180 V1.1.1, entitled "Requirements for communication of citizens with authorities/organizations in case of distress (emergency call handling)" in which it is stated in section 4.4.3 "Temporary blocking of Emergency Calls from a particular source" that the solution can deliberately block/release nuisance calls from a certain source.

A review of the current state of the art indicates that there are some documents which can be related to the present invention:
- Patent application PCT WO 05/060301 A1 entitled "Emergency Response device for summoning a responder and routing said responder to a victim", is based on a location system and focuses on responding to particular cases by going to the point in question, not to groups nor to giving response messages.
- Patent application PCT 02/073480 A1 entitled "Method and communication system to generate response messages", consists of a system for processing calls or messages. Nevertheless, the method proposed does not adapt to the incoming messages, and furthermore it only gives a single response.
- Patent application PCT WO 05/011251 A1 titled "System and method of providing emergency response to a user carrying a user device" relates to a method and system for offering individual responses in cases of emergency and does not attend to massive responses like the object of the present invention.
- Patent US 6816885 B1 discloses a method and system to intelligently handle large volume of e-mail received from a plurality of senders, using an expert system, a reply template generator and a new knowledge base. However, this document discloses an inefficient method, since each time an e-mail is received, and provided that a reply must be sent, a reply template is generated, increasing the computing time.

Thus, the inventors, who are persons skilled in the art, are not aware of any massive response system which can automatically format and process a large number of messages in order to coherently respond to each message received (an effective personnel reduction is necessary to perform the described function) with suitable quality and in a limited period of time, these features being understood as subjective assessments of the user.

### Description of the Invention

The system and method for providing automatic responses to a massive input of messages, object of the present invention patent is set forth in order to reduce or where applicable, eliminate the problems mentioned above.

Given an extraordinary situation in which a massive input by different means occurs, a system able to automatically receive, format and coherently and suitably respond to the largest possible number of messages in the shortest time possible is desired.

The method will comprise the following steps:
1. Formatting the different messages to a unified format.
2. Storing metadata for sending responses.
3. Handling messages and designing the response.
   a. Applying rules.
   b. Obtaining content and metadata information.
   c. Assigning an identifier to each response.
   d. Generating a rule for the following messages.
4. Generating the message suitable for each input message.
5. Channeling the response.

A series of rules will thus be applied to the messages to determine the response. The novelty in this case is that the rules are dynamically generated and the system learns from the responses that it has given to the previous messages, since the starting point is a case in which massive inputs of messages related to a certain situation, such as emergency situations, are expected.

The main features of the system are the following:
- The content of the messages is not stored.
- The content of all messages is not processed for the purpose of achieving quick responses.
- The system becomes quicker as it learns from the situation, providing an adaptive character to a process which is not adaptive. The first messages, those for which there is not a rule to apply, will take longer to be answered, but when a certain number of messages have arrived, the next messages can be answered without their content being processed.

In the first and second steps of the method, corresponding to the formatting and storing of metadata, the different input messages are first formatted, obtaining a unified message structure, said unified message structure comprising:
- Message identifier.
- Metadata:
   o Type of message.
   o Address, number or the like defining the origin of the message.
   o Date and time.
   o Calculations about the message, such as the size of the message (in letters, bits, bytes or any other measurement), the algebraic sum of the bits forming them (checksum), statistical count of the symbols of the message (such as the number of letters and numbers of each type for example) adjusted or not adjusted to its relative position, etc.
- Message content.

Subsequently a combination of metadata, contents and a message identifier ID allowing its subsequent processing is temporarily or permanently stored.

Once the data is formatted and stored, it is processed, passing through the following steps for that purpose:
1. The message will pass through the "rule applying" module: At this point, an attempt is made to find some similarity with any already previously answered message or any feature which allows assigning a previous or known response. They can be rules obtained from the content, such as all the messages containing a certain word for example, and they will be answered with the response message with identifier number X. They can also be rules obtained through metadata, such as all the messages the origin of which is Y for example, they will be answered with the response message with identifier number Z. They can also be rules obtained from a combination of both or even from other sources outside the system. The rules can either have or not have priority or hierarchy between one another in the event that several are valid for the same case.
   a. If a rule is applicable, there will already be a response number assigned to a message number.
   b. If there is no rule to respond to the message, the metadata and content analysis will be carried out.
2. Through the content analysis (obtaining content information) and in parallel, through the metadata analysis (obtaining content information), on one hand the content for the response message that is considered to be suitable for the incoming message will be created, to which an index or identifier for referring to it (ID) will be given, and on the other hand information will be provided to the rule generator so that it can perform its function. There are a number of options for creating the content of the response message based on the metadata and content analysis. Some metadata and/or content analysis possibilities can be:
   a. Selecting words and/or sections of the incoming message and assigning to it indexes which allow finding a value or set of values for the entire sentence. It can subsequently be adjusted, by means of using decision trees or another logic process, according to the context of the complete sentence, the metadata or the information obtained during the analysis of the message.
   b. Selecting data associated to each word and/or section of the message by a module responsible for this function and carrying out an valuation or set of valuations of the set of this associated data and of the relationship between them. It can subsequently be adjusted, by means of using decision trees or another logic process, according to the context of the complete sentence, the metadata or the information obtained during the analysis of the message.
   c. Sequentially selecting words from the incoming message and independently processing them by a comparative or interpretive process (fragmentation into root plus prefixes, suffixes or gender, number, mode modifiers...) in order to find a meaning for each of them. It can subsequently be adjusted, by means of using decision trees or another logic process, according to the context of the complete sentence, the metadata or the information obtained during the analysis of the message.
   d. Conducting a comparative analysis of the complete message or by parts (content and/or metadata) with regard to a dynamic or static database calculating the most similar case, either by content and/or metadata, or by carrying out an option elimination process such that one or several possibilities for referring to the incoming message are selected.
   e. A mixture of the above.
      Similarly, there are the following possibilities for choosing the construction of the response content, always according to the incoming message:
      a. Selecting from a dynamic or static database a response or responses suitable for the result obtained from analyzing the content and/or the metadata.
      b. Completing one or several grammatical structures with the data obtained from the content and/or metadata, or with data obtained from the content and/or metadata of the message received or from the analysis conducted on the data.
      c. Creating one or several grammatical structures suitable for responding to the message received according to the content and/or metadata of the message received or to the analysis conducted on the data and subsequently completing it.
      d. Performing one or several statistical or random tests of the grammatical construction and contrasting it with the information of the message (content and/or metadata) in order to use it or not.
      e. Performing one or several statistical or random tests for filling a grammatical structure and contrasting it with the information of the message (content and/or metadata) in order to use it or not.
      f. A mixture of the above.
3. The rule generator will make the decision of whether or not to construct new rules or modify the existing rules in the rule applying module by means of statistical analysis, calculations and applying logic to the received data regarding which response message has been used for the different incoming messages and taking into account the steps given by the content analysis and metadata analysis modules.
4. The response messages will be formed with the input of a grammatical pattern database.
5. Each generated response message will be assigned an identifier (response ID) and they will be stored in a database.
6. For each processed message, the result will be a response ID assigned to a message number.
7. With the input message ID and the response ID, the message construction block will access the metadata and response content database in order to be able to channel the output of the response message.

One or several response message contents previously stored with their corresponding ID for messages which, after processing, have not been understood or contain so little information that it is not possible to construct a coherent response message are taken for granted. These response messages have the sense of messages by default or in absence of a better option, and can be known by the modules obtaining information of the input message and generating the response message in order to optimize their process.

It is possible to use a database in which when a new emergency situation arises, there is only an amount of previously stored messages and the rest of the contents are dynamically generated, adapted to the current crisis situation.

In addition, it is not necessary for the generation of rules to be exclusively automated, but rather it can be created manually by the system operators based on their experience or on the information that they have relating to the reason that has caused the avalanche of contacts. The existence of automated systems for capturing data (such as the situation of fires or flooding for example) makes this access interface for creating rules from said automatic systems even more interesting.

In the described way, the following advantages have been obtained compared to the current state of the art:
- Blocking the response and service systems is prevented at the same time that it provides information of the received messages in such a way that it is useful for the people responsible of the service center.
- The effect of the dynamic generation of rules based on the analysis data and the consequent adaptation of a processing method, not to each received message or particular case, but rather to the set of all of them, taking them as a unit and individual treatment losing importance, is a noticeable change in the result of the automated and massive handling of messages in terms of perceived quality and response time.

### Brief Description of the Drawings

A series of drawings will be very briefly described below aiding to better understand the invention and which are specifically related to an embodiment of said invention set forth as an illustrative but non-limiting example thereof.

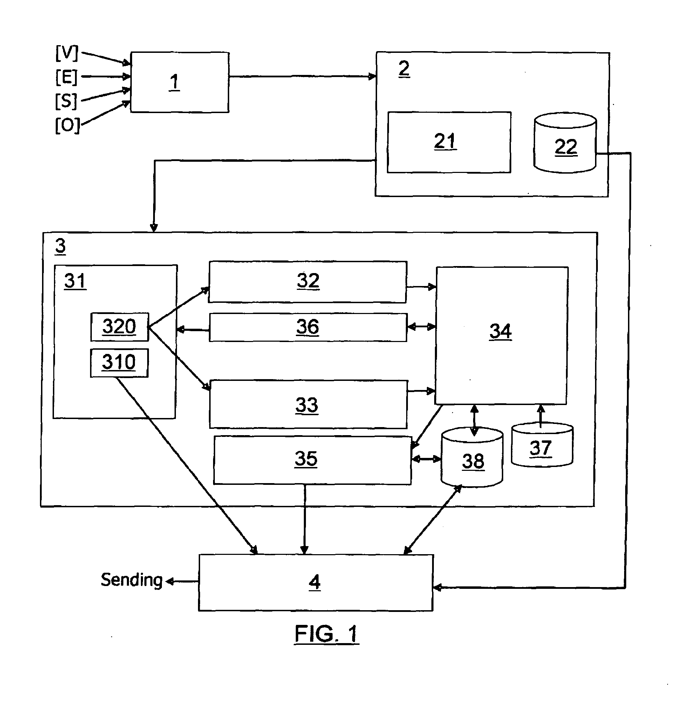

Figure 1 shows a general scheme of the system object of the invention.

### Preferred Embodiment of the Invention

As can be observed in Figure 1, the system for providing automatic responses to a massive input of messages object of the present invention, comprises:
- A formatting process [1] for formatting the messages received by the users by different means such as electronic mail [E], SMS [S], voice [V] or others [O], in which the messages acquire a unique format comprising:
   o An identifier for each incoming message.
   o The metadata of each message with incoming identifier.
   o The content of each incoming message
- A storage process [2] comprising:
   o A processing queue [21] of the incoming messages.
   o An input historical register or database [22] of the incoming message identifiers and/or of the metadata and/or of the contents.
- A message handling and response design process [3] comprising:
   o A rule application module [31].

   o A content information obtaining module [32]
   o A metadata information obtaining module [33].
   o A response construction and response identifier decision module [34].
   o A response identifier assigning module [35].
   o A rule generating module [36] for the following messages.
   o A semantic and/or grammatical pattern historical register or database [37].
   o A response content and identifier storage historical register or database [38], in which the type response contents and response identifiers and those generated in the process are stored.
- A response construction process [4]. In which in the rule application module [31]:
- If there is a rule applicable to the incoming message [310], a response identifier will be assigned for that message number, passing directly on to the response construction process [4].
- If there is no rule applicable to the incoming message [320], the content information obtaining module [32] and the metadata information obtaining module [33] are processed in parallel. These modules will pass information to the content construction and identifier decision module [34] and in addition will pass information to the rule generating module [36].

The rule generating module [36] will make the decision of whether or not to construct new rules or modify the existing rules in the rule application module [31] according to the information obtained from the content information module [32] and from the metadata information module [33].

The content construction and identifier decision module [34] receives information from the grammatical patterns historical register or database [37], based on which it will construct the suitable response content. The response identifier [35] will finally be assigned which can be new or existing, passing on to the response construction process [4].

The response construction process [4] receives information from:
o The input metadata and identifier historical register or database [22].
o The response identification assigning module [38] for assigning a response identification to a message number.
o The rule application module [31].
o The response content and response identifier historical register or database [38].

In which the most possible suitable response message for each incoming message which is sent is constructed with the input data received from the database [22], the message number- the response number resulting either from the module [31] or from the module [35] and the response content for this identifier present in the database [38]. This process [4] can update or not update the data contained in the historical register or database [38].

## Claims

1. A system for providing automatic responses to a large number of incoming messages, comprising:
- formatting means (1) arranged to provide the incoming messages with a single format;
- storage means (2) comprising:
o a processing queue [21] of the incoming messages;
o an input database [22] configured for storing the formatted incoming messages
**characterized in that** it further comprises:
- message handling and response design means [3] comprising:
o a rule application module [31] arranged to:
check if determined rules are applicable to each formatted incoming message;
• in the event that a rule is applicable to a formatted incoming message, assign to said incoming message a response identifier corresponding to said rule;
• in the event that there is no rule applicable to a formatted incoming message, provide the formatted incoming message to a content information module (32) and to a metadata information module (33);
o the content information obtaining module (32) arranged to obtain content information on the formatted incoming message;
o the metadata information obtaining module (33) arranged to obtain metadata information on the formatted incoming message;
o a response construction module (34) arranged to generate a response content according to the content and metadata information previously obtained and according to pattern information stored in a pattern database (37);
o a response identifier assigning module [35] arranged to assign a response identifier to said generated response content;
o a rule generating module [36] arranged to decide, according to the content and metadata information previously obtained, on whether it is necessary to generate a rule or modify an existing rule in the rule applying module (31), and **in that** case respectively generate a rule or modify an existing rule in the rule applying module (31);
o a response content and identifier database (38), arranged to store the generated response content and its assigned response identifier ;
- response construction means (4) arranged to generate the response message for the incoming message, starting from:
• the formatted incoming message retrieved from the input database (22);
• the response content corresponding to the response identifier and retrieved from the response content and identifier database (38)

2. A system according to claim 1, wherein the incoming messages are selected among electronic mail [E], SMS [S] and voice message [V].

3. A system according to any of claims 1 to 2, wherein each formatted message comprises an identifier, the metadata and the content of the corresponding incoming message.

4. A system according to any of claims 1 to 3, wherein the pattern information stored in the pattern database (37) comprises at least one of the following:
- grammatical patterns;
- semantic patterns.

5. A system according to any of claims 1 to 4, wherein the rules of the rule application module (31) have hierarchy between one another, in the event that a rule is applicable to a formatted incoming message.

6. A method for providing automatic responses to a large number of incoming messages, comprising, for each incoming message:
- formatting the incoming message;
- storing the formatted incoming message in an input database (22);
**characterized In that** it further comprises:
- checking if determined rules in a rule applying module(31)are applicable to the formatted incoming message;
- in the event that a rule is applicable to said formatted incoming message, assigning to the incoming message a response identifier corresponding to said rule;
- in the event that there is no rule applicable to said formatted incoming message:
• obtaining content and metadata information on the formatted incoming message;
• according to the content and metadata information previously obtained, deciding on whether it is necessary to generate a rule or modify an existing rule in the rule applying module (31), and **in that** case generating a rule or modifying an existing rule in the rule applying module (31), respectively;
• generating a response content according to the content and metadata information previously obtained and according to pattern information stored in a pattern database (37);
• assigning a response identifier to said generated response content;
• storing the generated response content and its assigned response identifier in a response content and identifier database (38);
- generating the response message for the incoming message, starting from:
• the formatted incoming message retrieved from the input database (22);
• the response content corresponding to the response identifier and retrieved from the response content and identifier database (38).

7. A method according to claim 6, wherein the incoming messages are selected among electronic mail [E], SMS [S] and voice message [V].

8. A method according to any of claims 6 to 7, wherein each formatted message comprises an identifier, the metadata and the content of the corresponding incoming message.

9. A method according to any of claims 6 to 8, wherein the pattern information stored in the pattern database (37) comprises at least one of the following:
- grammatical patterns;
- semantic patterns.

10. A method according to any of claims 6 to 9, wherein the rules of the rule application module (31) have hierarchy between one another, in the event that a rule is applicable to a formatted incoming message.

## Patentansprüche

1. System zum automatischen Antworten auf eine große Zahl von eingehenden Nachrichten, das Folgendes umfasst:
- Formatierungsmittel (1) zum Bereitstellen der eingehenden Nachrichten in einem einzigen Format;
- Speichermittel (2), das Folgendes umfasst:
o eine Verarbeitungsschlange [21] der eingehenden Nachrichten;
o eine Eingangsdatenbank [22], die zum Speichern der formatierten eingehenden Nachrichten konfiguriert ist,
**dadurch gekennzeichnet, dass** es ferner Folgendes umfasst:
- ein Nachrichtenhandhabungs- und Antwortentwurfsmittel [3], das Folgendes umfasst:
o ein Regelanwendungsmodul [31] zum:
• Prüfen, ob ermittelte Regeln auf jede formatierte eingehende Nachricht anwendbar sind;
• falls eine Regel auf eine formatierte eingehende Nachricht anwendbar ist, Zuordnen einer der genannten Regel entsprechenden Antwortkennung zu der genannten eingehenden Nachricht;
• falls keine Regel auf eine formatierte eingehende Nachricht anwendbar ist, Senden der formatierten eingehenden Nachricht zu einem Inhaltsinformationsmodul (32) und zu einem Metadaten-Informationsmodul (33);
o das Inhaltsinformationseinholmodul (32) zum Einholen von Inhaltsinformationen über die formatierte eingehende Nachricht;
o das Metadaten-Informationseinholmodul (33) zum Einholen von Metadateninformationen über die formatierte eingehende Nachricht;
o ein Antwortkonstruktionsmodul (34) zum Erzeugen eines Antwortinhalts gemäß den zuvor eingeholten Inhalts- und Metadaten-Informationen und gemäß in einer Musterdatenbank (37) gespeicherten Musterinformationen;
o ein Antwortkennungszuordnungsmodul [35] zum Zuordnen einer Antwortkennung zu dem genannten erzeugten Antwortinhalt;
o ein Regelerzeugungsmodul [36] zum Entscheiden, je nach den zuvor eingeholten Inhalts- und Metadaten-Informationen, ob es notwendig ist, eine Regel zu erzeugen oder eine existierende Regel in dem Regelanwendungsmodul (31) zu modifizieren, und in diesem Fall jeweils zum Erzeugen einer Regel bzw. zum Modifizieren einer existierenden Regel in dem Regelanwendungsmodul (31);
o eine Antwortinhalts- und -kennungsdatenbank (38) zum Speichern des erzeugten Antwortinhalts und seiner zugeordneten Antwortkennung;
- Antwortkonstruktionsmittel (4) zum Erzeugen der Antwortnachricht für die eingehende Nachricht, beginnend mit:
• der aus der Eingangsdatenbank (22) abgerufenen formatierten eingehenden Nachricht;
• dem Antwortinhalt, der der Antwortkennung entspricht und aus der Antwortinhalts- und -kennungsdatenbank (38) abgerufen wurde.

2. System nach Anspruch 1, wobei die eingehenden Nachrichten aus Email [E], SMS [S] und gesprochener Nachricht [V] ausgewählt sind.

3. System nach einem der Ansprüche 1 bis 2, wobei jede formatierte Nachricht eine Kennung, die Metadaten und den Inhalt der entsprechenden eingehenden Nachricht umfasst.

4. System nach einem der Ansprüche 1 bis 3, wobei die in der Musterdatenbank (37) gespeicherten Musterinformationen wenigstens eines der folgenden umfassen:
- grammatikalische Muster;
- semantische Muster.

5. System nach einem der Ansprüche 1 bis 4, wobei die Regeln des Regelanwendungsmoduls (31) eine Hierarchie untereinander haben, falls eine Regel auf eine formatierte eingehende Nachricht anwendbar ist.

6. Verfahren zum automatischen Antworten auf eine große Zahl von eingehenden Nachrichten, das für jede Eingangsnachricht Folgendes beinhaltet:
- Formatieren der eingehenden Nachricht;
- Speichern der formatierten eingehenden Nachricht in einer Eingangsdatenbank (22);
**dadurch gekennzeichnet, dass** es ferner Folgendes beinhaltet:
- Prüfen, ob ermittelte Regeln in einem Regelanwendungsmodul (31) auf die formatierte eingehende Nachricht anwendbar sind;
- falls eine Regel auf die genannte formatierte eingehende Nachricht anwendbar ist, Zuordnen einer der genannten Regel entsprechenden Antwortkennung zu der eingehenden Nachricht;
- falls keine Regel auf die genannte formatierte eingehende Nachricht anwendbar ist:
• Einholen von Inhalts- und Metadaten-Informationen über die formatierte eingehende Nachricht;
• Entscheiden, je nach den zuvor eingeholten Inhalts- und Metadaten-Informationen, ob es notwendig ist, eine Regel zu erzeugen oder eine existierende Regel in dem Regelanwendungsmodul (31) zu modifizieren, und in diesem Fall jeweils Erzeugen einer Regel bzw. Modifizieren einer existierenden Regel in dem Regelanwendungsmodul (31);
• Erzeugen eines Antwortinhalts je nach den zuvor eingeholten Inhalts- und Metadaten-Informationen und gemäß den in einer Musterdatenbank (37) gespeicherten Musterinformationen;
• Zuordnen einer Antwortkennung zu dem genannten erzeugten Antwortinhalt;
• Speichern des erzeugten Antwortinhalts und seiner zugeordneten Antwortkennung in einer Antwortinhalts- und -kennungsdatenbank (3 8);
- Erzeugen der Antwortnachricht für die eingehende Nachricht beginnend mit:
• der aus der Eingangsdatenbank (22) abgerufenen formatierten eingehenden Nachricht;
• dem Antwortinhalt, der der Antwortkennung entspricht und aus der Antwortinhalts- und -kennungsdatenbank (38) abgerufen wurde.

7. Verfahren nach Anspruch 6, wobei die eingehenden Nachrichten aus Email [E], SMS [S] und gesprochener Nachricht [V] ausgewählt sind.

8. Verfahren nach einem der Ansprüche 6 bis 7, wobei jede formatierte Nachricht eine Kennung, die Metadaten und den Inhalt der entsprechenden eingehenden Nachricht umfasst.

9. Verfahren nach einem der Ansprüche 6 bis 8, wobei die in der Musterdatenbank (37) gespeicherten Musterinformationen wenigstens eines der folgenden beinhalten:
- grammatikalische Muster;
- semantische Muster.

10. Verfahren nach einem der Ansprüche 6 bis 9, wobei die Regeln des Regelanwendungsmoduls (31) eine Hierarchie untereinander haben, falls eine Regel auf eine formatierte eingehende Nachricht anwendbar ist.

## Revendications

1. Système destiné à fournir des réponses automatiques à un grand nombre de messages arrivants, comprenant :
- des moyens de formatage (1) agencés pour conférer un format unique aux messages arrivants ;
- des moyens de stockage (2) comportant :
o une file d'attente de traitement [21] des messages arrivants ;
o une base de données d'entrée [22] laquelle est configurée pour stocker les messages arrivants formatés
**caractérisé en ce qu'**il comporte en outre :
- des moyens d'élaboration de réponse et de traitement de messages [3] englobant:
o un module d'application de règles [31] agencé pour :
• vérifier si des règles déterminées sont applicables à chaque message arrivant formaté ;
• dans l'éventualité où une règle est applicable à un message arrivant formaté, attribuer audit message arrivant un identifiant de réponse lequel correspond à ladite règle ;
• dans l'éventualité où aucune règle n'est applicable à un message arrivant formaté, présenter le message arrivant formaté à un module d'information de contenu (32) et à un module d'information de métadonnées (33) ;
o le module d'obtention d'information de contenu (32) agencé pour obtenir des informations de contenu au suj et du message arrivant formaté ;
o le module d'obtention d'information de métadonnées (33) agencé pour obtenir des informations de métadonnées au sujet du message arrivant formaté ;
o un module de construction de réponse (34) agencé pour générer un contenu de réponse en fonction des informations de contenu et de métadonnées obtenues précédemment et en fonction des informations de schéma stockées dans une base de données de schémas (37) ;
o un module d'attribution d'identifiant de réponse [35] agencé pour attribuer un identifiant de réponse audit contenu de réponse généré ;
o un module de génération de règles [36] agencé pour décider - en fonction des informations de contenu et de métadonnées obtenues précédemment - s'il est nécessaire ou non de générer une règle ou de modifier une règle existante dans le module d'application de règles (31), et dans ce cas respectivement générer une règle ou modifier une règle existante dans le module d'application de règles (31) ;
o une base de données d'identifiants et de contenus de réponse (38), agencée pour stocker le contenu de réponse généré et son identifiant de réponse qui lui a été attribué ;
- des moyens de construction de réponse (4) agencés pour générer le message de réponse pour le message arrivant, en commençant par :
• le message arrivant formaté ayant été récupéré à partir de la base de données d'entrée (22) ;
• le contenu de réponse correspondant à l'identifiant de réponse et ayant été récupéré à partir de la base de données d'identifiants et de contenus de réponse (38).

2. Système selon la revendication 1, les messages arrivants étant sélectionnés parmi les éléments suivants, à savoir le courrier électronique [E], le message SMS [S] et le message vocal [V].

3. Système selon l'une quelconque des revendications 1 à 2, chaque message formaté comportant un identifiant, les métadonnées et le contenu du message arrivant correspondant.

4. Système selon l'une quelconque des revendications 1 à 3, les informations de schéma stockées dans la base de données des schémas (37) comprenant au moins l'un des éléments suivants :
- schémas grammaticaux ;
- schémas sémantiques.

5. Système selon l'une quelconque des revendications 1 à 4, les règles du module d'application des règles (31) présentant une hiérarchie les unes par rapport aux autres, dans l'éventualité où une règle est applicable à un message arrivant formaté.

6. Procédé destiné à fournir des réponses automatiques à un grand nombre de messages arrivants, comprenant, pour chaque message arrivant :
- le formatage du message arrivant ;
- le stockage du message arrivant formaté dans une base de données d'entrée (22) ;
**caractérisé en ce qu'**il comporte en outre les opérations consistant à :
- vérifier si des règles déterminées présentes dans un module d'application de règles (31), sont applicables au message arrivant formaté ;
- dans l'éventualité où une règle est applicable audit message arrivant formaté, attribuer au message arrivant un identifiant de réponse lequel correspond à ladite règle ;
- dans l'éventualité où aucune règle n'est applicable audit message arrivant formaté :
• obtenir des informations de contenu et de métadonnées au sujet du message arrivant formaté ;
• en fonction des informations de contenu et de métadonnées obtenues précédemment, décider s'il est nécessaire ou non de générer une règle ou de modifier une règle existante dans le module d'application de règles (31), et dans ce cas générer une règle ou modifier une règle existante dans le module d'application de règles (31), respectivement ;
• générer un contenu de réponse en fonction des informations de contenu et de métadonnées obtenues précédemment et en fonction des informations de schéma stockées dans une base de données de schémas (37) ;
• attribuer un identifiant de réponse audit contenu de réponse généré ;
• stocker le contenu de réponse généré et son identifiant de réponse qui lui a été attribué dans une base de données d'identifiants et de contenus de réponse (38) ;
- générer le message de réponse pour le message arrivant, en commençant par :
• le message arrivant formaté ayant été récupéré à partir de la base de données d'entrée (22) ;
• le contenu de réponse correspondant à l'identifiant de réponse et ayant été récupéré à partir de la base de données d'identifiants et de contenus de réponse (38).

7. Procédé selon la revendication 6, les messages arrivants étant sélectionnés parmi les éléments suivants, à savoir le courrier électronique [E], le message SMS [S] et le message vocal [V].

8. Procédé selon l'une quelconque des revendications 6 à 7, chaque message formaté comportant un identifiant, les métadonnées et le contenu du message arrivant correspondant.

9. Procédé selon l'une quelconque des revendications 6 à 8, les informations de schéma stockées dans la base de données des schémas (37) comprenant au moins l'un des éléments suivants :
- schémas grammaticaux ;
- schémas sémantiques.

10. Procédé selon l'une quelconque des revendications 6 à 9, les règles du module d'application des règles (31) présentant une hiérarchie les unes par rapport aux autres, dans l'éventualité où une règle est applicable à un message arrivant formaté.
